# EUROPEAN PATENT SPECIFICATION

(11) **EP 3 836 012 B1**
(45) Date of publication and mention of the grant of the patent: **10.04.2024**
(21) Application number: 20206628.8
(22) Date of filing: 10.11.2020
(51) Int. Cl.: G06V 20/40, G06V 40/20

(54) **A DEVICE, COMPUTER PROGRAM AND METHOD FOR DETERMINING HANDBALL PERFORMED BY A PLAYER**
VORRICHTUNG, COMPUTERPROGRAMM UND VERFAHREN ZUR BESTIMMUNG DES VON EINEM SPIELER DURCHGEFÜHRTEN HANDBALLS
DISPOSITIF, PROGRAMME INFORMATIQUE ET PROCÉDÉ POUR DÉTERMINER LE HANDBALL EFFECTUÉ PAR UN JOUEUR

(30) Priority: 12.12.2019 GB 201918299
(43) Date of publication of application: 16.06.2021
(73) Proprietor: Sony Group Corporation, Tokyo 108-0075 (JP); Sony Europe B.V., Weybridge, Surrey KT13 0XW (GB)
(72) Inventor: HAWKE, Edward, Basingstoke, RG22 4SB (GB)
(74) Representative: D Young & Co LLP

(56) References cited:
- US-A1- 2019 087 661
- Yu Xinguo: "An effective trajectory-based algorithm for ball detection and tracking with application to the analysis of broadcast sports video", Ph.D. Thesis, Dept. of Computer Science, Univ. of Singapore, 2004, 3 June 2005 (2005-06-03), pages 1-182, XP055799663, Retrieved from the Internet: URL:https://core.ac.uk/download/pdf/486280 11.pdf [retrieved on 2021-04-28]

## Description

### BACKGROUND

### Field of the Disclosure

The present technique relates to a device, computer program and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

Video Assisted Referee (VAR) has been implemented in many sporting events. VAR assists referees in making the correct decision at a sporting event. For example, in a soccer match, VAR is sometimes used to help identify handballs, offside, goals, fouls and the like.

As noted above, one of the decisions that VAR assists with is handball detection. The International Football Association Board (IFAB) introduced an amendment to the handball rule in soccer such that a handball will be awarded if a player makes his/her body an "unnatural silhouette" with his/her arm when the football strikes his/her arm or hand.

It is an aim of the present disclosure to improve handball detection using VAR.

Prior art includes: Yu Xinguo: "An effective trajectory-based algorithm for ball detection and tracking with application to the analysis of broadcast sports video", Ph.D Thesis, Dept. of Computer Science, Univ. of Signapore, 2004, 3 June 2005; and US 2019/087661 A1. Each of these prior art disclosures describes a prior art device.

### SUMMARY

The invention is defined by the claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a plan view of a sporting event held at a sporting venue with cameras being located at different positions around the sporting venue;
Figure 2 shows a data structure storing a camera identifier in association with the camera position and the camera type;
Figure 3 shows an apparatus according to embodiments of the disclosure;
Figure 4A to 4D shows poses of a soccer player according to embodiments;
   and
Figure 5 shows a flow chart according to embodiments of the disclosure.

### DESCRIPTION OF THE EMBODIMENTS

Referring now to the drawings, wherein like reference numerals designate identical or corresponding parts throughout the several views.

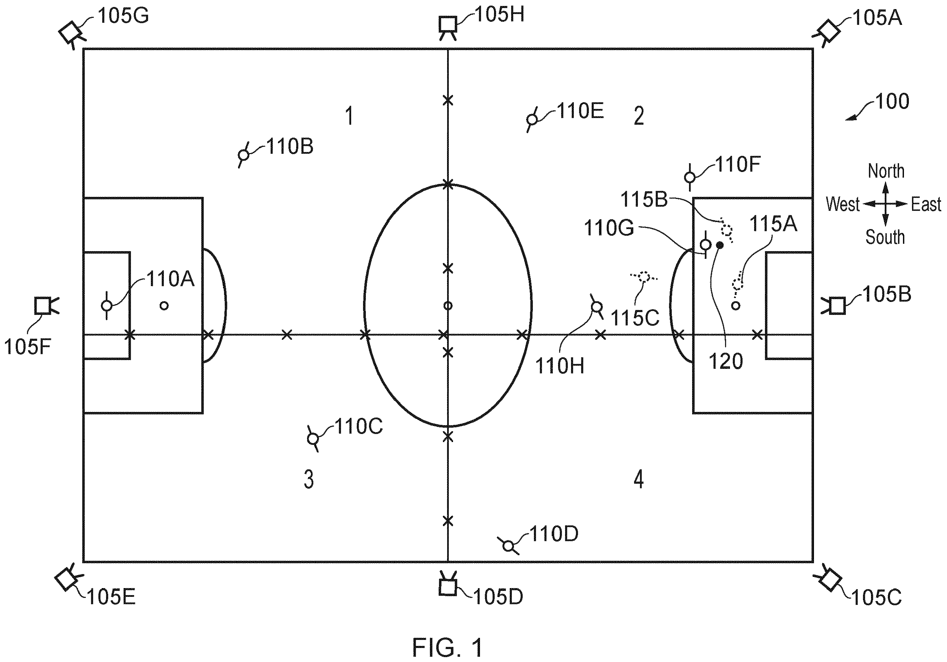

Figure 1 shows a plan view of a sporting event held at a sporting venue with cameras being located at different positions around the sporting venue. In the embodiments of Figure 1, the sporting venue is a soccer stadium and the sporting event is a soccer match. However, as would be appreciated, the disclosure is not so limited and any sporting event at any sporting venue is envisaged. For example, the sporting event may be a rugby match at a rugby stadium, an American football match at an American football stadium, a baseball match at a baseball stadium or the like.

In the sporting venue 100, the pitch has a number of cameras 105A-H around it. Each of the plurality of cameras 105A-H is placed in a different position around the pitch and captures a different view of the pitch. In other words, each of the plurality of camera is located at a different geographical or physical location around the pitch. In embodiments, the pitch is surrounded by a plurality of cameras. However, the disclosure is not so limited and the camera may be located around an area of the pitch that is smaller than the pitch.

Each camera 105A-H generates a camera feed that is an image or image stream of the field of view captured by the camera. These camera feeds may be broadcast video feeds which are sent to viewers at home watching the sporting event on television, or over the Internet or may be used to capture the event for use on in-stadium displays. The camera 105A-H may be specifically positioned to be used to assist the referee in a Video Assisted Referee (VAR) scenario. Of course, the cameras may have a mix of uses such as television cameras, and VAR cameras or the like.

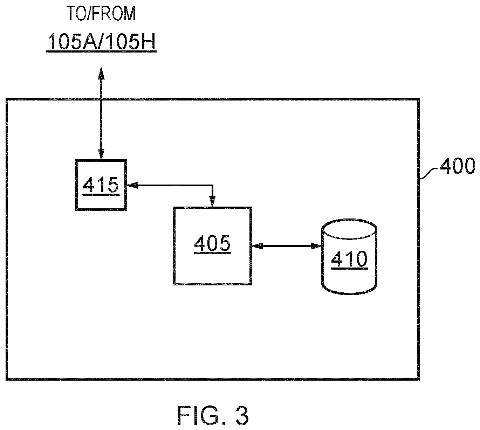

Although not shown explicitly in Figure 1, the camera feeds generated by each of the plurality of cameras 105A-H which are located at a different position in a sporting venue are fed into an apparatus according to embodiments of the disclosure. Such an apparatus will be explained with reference to Figure 3 of the present application.

As will be apparent to the skilled person, in the description of Figure 1, there are provided eight cameras located at different positions around the sporting venue. Of course, the disclosure is not so limited and any number of cameras is envisaged.

In the example of Figure 1, each camera 105A-H is located at a different position around the sporting venue and has a different viewing perspective of the sporting event being played on the pitch in the sporting venue. As each of the cameras 105A-H is located at a different position in the sporting venue, each camera has a different field of view of the sporting event. This means that each camera 105A-H has a different field of view of the sporting event. Further, each camera 105A-H may have a different focal length or different lens arrangement compared to the other cameras. This means that different cameras may capture different perspectives of incidents on the pitch. For example, camera 105D is, in embodiments, located in a broadcast gantry. This means that camera 105D captures the entirety of the pitch in its field of view. However, due to the wide field of view, this means that it will be difficult for camera 105D to capture a detailed image of an incident that occurs in a penalty box on the pitch.

Camera 105B is located behind the East goal. The camera 105B may be a camera having a narrow field of view, for example of the East penalty box, and a short focal distance. This means that camera 105B may capture a detailed image of an incident occurring in the East penalty box but may not capture an incident occurring in the West penalty box.

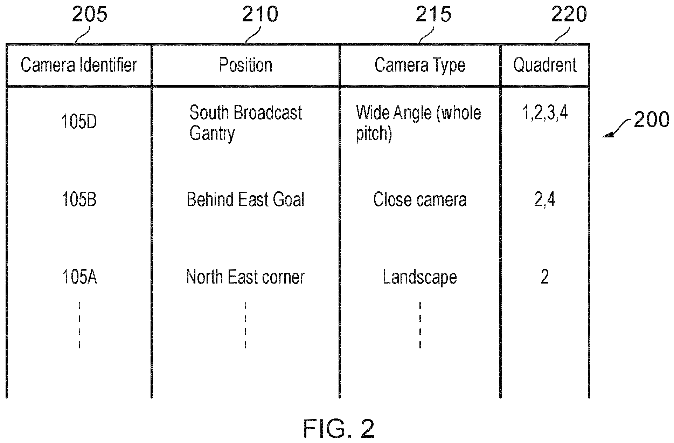

Accordingly, each camera 105A-H will have a different field of view of the pitch by virtue of the different position of each camera. This means that each camera 105A-H will have a different field of view of any incident that occurs on the pitch. Moreover, and as described with reference to Figure 2, each camera may have a different focal length or different lens arrangement which means that each camera will have a different view in respect of any incident. This different focal length or different lens arrangement are examples of different characteristics or types of camera.

Referring to Figure 1, the sporting event is a soccer match. A first team shown in solid lines are playing a second team shown in dotted lines. For ease of explanation, only several players from each team are shown in Figure 1. Specifically, the first team includes players 110A-110H and the second team includes players 115A-115C. Additionally, the ball 120 is shown in Figure 1.

In an embodiment of the disclosure, an incident has occurred in the sporting event shown in Figure 1. The incident represented in Figure 1 is a handball performed by player 110G of the first team. Of course, although the incident shown in Figure 1 is a handball, any kind of incident such as an offside, goal, foul on a player or the like is envisaged. Of course, in the event that the sporting event is not soccer, other incidents are envisaged. An incident therefore is defined as an event occurring that requires review of captured video footage by an operator. In embodiments, this is using the apparatus shown in Figure 3 which is, for example, a VAR apparatus.

In the example of Figure 1, the incident occurred near the East penalty box on the pitch.

The pitch may be divided into quadrants. These are shown in Figure 1 as quadrant 1-4.

Specifically, the incident occurred in quadrant 2 of the pitch. As will become apparent later, this may allow the approximate location on the pitch of an incident to be defined. Accordingly, the pitch may be divided in any manner and may include dividing the pitch into 2, 8, 16 or more areas. Typically, the more divisions are provided, the more accurate the location of the incident may be defined. Moreover, the shape of the divisions may vary. For example, in areas where there are a high number of incidents relative to other areas of the pitch (for example in the penalty area), this area may have more divisions compared to the rest of the pitch.

Turning now to Figure 2 that shows a data structure storing a camera identifier in association with the camera position and the camera type. The data structure may be a database or the like. Of course, the disclosure is not so limited.

In the data structure 200 three camera identifiers are shown. These camera identifiers are shown in the camera identifier column 205. Associated with each camera identifier is the position of the camera. Although this is described as being a location at the sporting event, the position of the camera may be a GPS co-ordinate or some other unique position that identifies the position of the camera at the sporting venue. This position is shown in column 210. In other words, the geographical position of the camera having the identifier shown in column 205 is shown in column 210.

Further, the data structure 200 has a camera type column 215. The camera type column 215 stores the type of camera having the camera identifier shown in column 205. In other words, the camera type column 215 shows the camera type associated with the camera identifier shown in column 205.

As noted above, the camera type relates to the field of view of the camera having the camera identifier in column 205. For example, the camera located on the "south broadcast gantry" is a wide angle camera type that shows the whole pitch. This is sometimes referred to as a camera number 1 or Main camera as this camera has a field of view covering the entire pitch.

In other examples, the camera identifier 105B shows a camera positioned behind the goal located on the east side of the sporting venue. This type of camera typically is a close camera meaning that it is following the movement of the ball or a certain player and its field of view includes the ball or a particular player.

In a third example, a camera identified with camera identifier 105A is located on the north-east corner of the sporting venue. This camera has a wider field of view and is designed to capture the north-eastern quadrant (quadrant 2 in Figure 1) of the sporting venue. This camera type is known as a landscape camera as noted in column 215.

Finally, a quadrant camera column 220 is shown. In the quadrant camera column 220, the quadrant which the field of view of the camera associated with the camera identifier 205 is noted. In other words, the camera 105D has a field of view covering all quadrants, camera 105B has a field of view covering quadrants 2 and 4 and camera 105A has a field of view covering quadrant 2.

Referring to Figure 3, an apparatus 400 according to embodiments of the disclosure is shown. The apparatus 400 includes processing circuitry 405. The processing circuitry 405 is any kind of circuitry that controls the apparatus 400 to perform a method according to embodiments of the disclosure. The processing circuitry 405 may therefore be an Application Specific Integrated Circuit (ASIC) or a microprocessor that operates under the control of software code.

The software code may be a computer program that is stored on storage 410 located within the apparatus 400 and connected to the processing circuitry 405. The storage 410 may be any kind of computer readable storage such as solid state storage, magnetically readable storage or optically readable storage. The processing circuitry 405 is also connected to communication circuitry 415. The communication circuitry 415 may be any kind of circuitry that allows the apparatus 400 to communicate with the cameras located at the sporting venue. In other words, the communication circuitry 415 allows the apparatus 400 to communicate with the plurality of cameras 105A-H shown in the sporting venue of Figure 1. This communication may occur by a direct connection between the apparatus 400 and the cameras or via a network such as over the internet or the like. The purpose of the communication circuitry 415 is to receive an image or camera feed (which may include a plurality of images) from the cameras provided at the sporting venue.

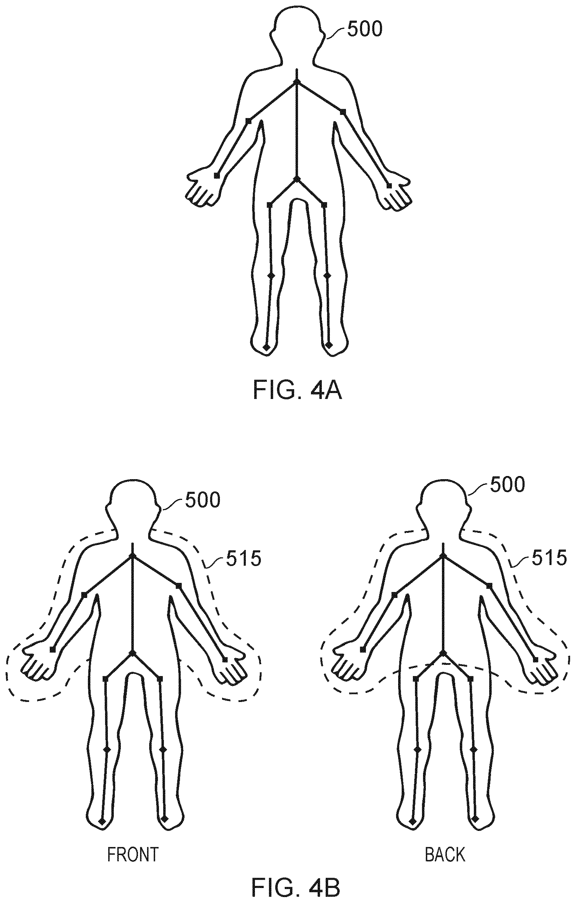

Referring to Figure 4A, a pose diagram 500 is shown of a player in a soccer match. The pose diagram is a diagram showing the pose of the player. This usually consists of a plurality of straight lines and is derived from an image of the player. The mechanism for obtaining the pose diagram 500 is known and so will not be described for brevity. However, as will be appreciated, one method of generating the pose diagram is to obtain an image of the football player from the captured images and to apply a model such as the PoseNet model or the like.

As noted above, a handball will be awarded if a player makes his/her body an "unnatural silhouette" with his/her arm when the football strikes his/her arm or hand. In order to detect whether the football strikes the hand or arm of a player, various techniques may be used. In embodiments, ball tracking may be used which detects and tracks the movement and thus the position of the ball on the pitch at any one time.

These ball tracking techniques may be used in conjunction with player detection that detects the position of the player, to determine when the ball strikes the player's arm or hand. This is advantageous because ball tracking and player tracking techniques can infer the position of the ball and/or the player between captured frames. This allows accurate detection of a handball. Moreover, the use of ball and player tracking enables an automated mechanism for determining when the ball strikes the hand or arm of the player. Of course, other methods of detecting whether a ball contacts an arm or hand are known as would be appreciated.

In addition to the above, the techniques for detecting whether the player makes his/her body an "unnatural silhouette" are not known.

Figure 4B shows a pose diagram 510. As would be appreciated the pose performed by the player in Figure 4B is the same as that performed by the player in Figure 4A. However, a natural silhouette pose 515 is also shown. The natural silhouette pose 515 is a boundary which defines a natural silhouette for a player. The boundary defining a natural silhouette of the player may be opaque but the natural silhouette pose 515 may be translucent. This allows the boundary and the player to be seen together. This allows an operator to see the natural silhouette pose 515 overlaid onto the player to determine if the body is in an unnatural silhouette. The natural silhouette pose 515 defines a boundary for a natural silhouette for the arms and hands of the player. Therefore, if the pose of the player is on or within the boundary when the ball strikes the player arm or hand, then the player will be determined to not make his/her body an "unnatural silhouette" and no handball will be awarded. However, if the pose of the player is outside the boundary when the ball strikes the player's arm or hand, then the player will be determined to make his/her body an "unnatural silhouette" and a handball will be awarded. For ease of explanation, the pose diagram is shown for the front image of the player and a pose diagram is shown for the back image of the player. As will be appreciated, the pose diagrams in Figure 4B are mere examples and any shape or size of boundary is envisaged.

The natural silhouette pose 515 may be generated for a player having a specific height and build. In other words, the natural silhouette pose 515 may be defined for a player being 1.80m tall and of slim build. Therefore, if the player in the image is of a different height or of a different body shape, then the natural silhouette pose 515 may be altered accordingly. So, for example, if the player is 2.00m tall with a heavy build, their natural silhouette pose 515 will be altered accordingly. The height and/or build of the player may be stored as metadata associated with the player. Indeed, any metadata associated with the player may be used to adjust the natural silhouette pose. Therefore, the natural silhouette pose may be altered in accordance with player metadata.

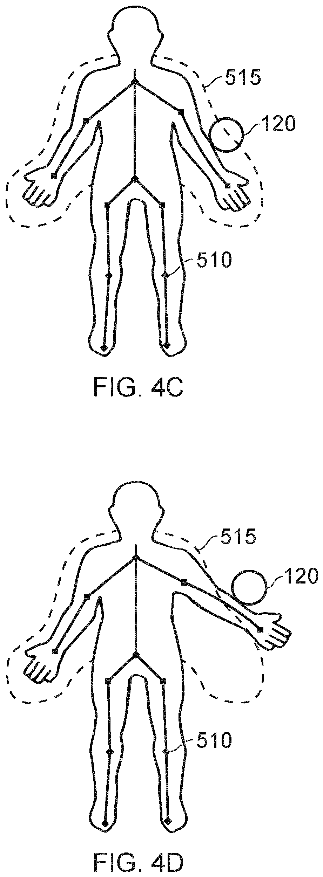

Referring to Figure 4C, the natural silhouette player pose 515 is overlaid onto an image of a player at the moment the ball 120 hits the player's arm or hand. In the example of Figure 4C, the player's arm and hand of the pose diagram 510 is within the boundary defined by the natural silhouette player pose 515. Therefore, although the ball 120 strikes the players arm, because the player was not making his or her body into an unnatural silhouette (as defined by the pose diagram), a handball will not be given.

The pose diagram will be referred to as a predetermined pose. This judgement is determined by comparing the pose diagram of the player with the natural silhouette player pose 515. In the event that the pose diagram is within the boundary of the natural silhouette player pose 515 at the moment the ball strikes the player's arm or hand, the handball will not be given.

Referring to Figure 4D, however, it can be seen from the pose diagram 510 of the player that at least one arm and/or hand is outside the natural silhouette player pose 515 at the moment the ball strikes the player's arm or hand. Accordingly, the player is determined to make an unnatural silhouette with his or her body at the moment the ball 120 strikes the player's arm or hand. Therefore, assuming that the ball contacts the player's arm or hand at the moment of impact, and the arm and/or hand is outside the natural silhouette, a handball will be given.

A handball decision will be given if any of the ball is outside of the natural silhouette pose 515 when the ball contacts the player's arm or hand. Of course, the disclosure is not so limited and a handball decision will be given if a majority of the ball is outside the natural silhouette pose 515 when it contacts the player's arm or hand. The majority of the ball may be determined by counting the number of pixels of the ball that are located outside the natural silhouette pose 515 and comparing these to the number of pixels of the ball that are located on or inside the natural silhouette pose 515. In the event that the number of pixels outside the natural silhouette pose 515 is greater than the number of pixels that are located on or inside the natural silhouette pose 515 when the ball contacts a player's arm or hand, then a handball decision will be given.

Although the foregoing describes the pose being a number of linear segments derived from software such as PoseNet, the disclosure is not so limited. Otherwise, a model of the player may be derived from the image. This model may be a 3D image which allows the natural silhouette player pose 515 to be overlaid onto the 3D image of the player. A model may be generated using known technology such as character rigging which is a known technique and renders a 3D model into a certain pose based on the derived pose of the player. The generation of the 3D model allows the operator to view the incident more clearly. Specifically, by viewing the incident in 3D allows the operator to view the incident from all angles. This allows a more accurate decision regarding handball to be made. Moreover, by viewing the incident in 3D allows the decision to be illustrated to viewers of the match more clearly. This assists in proving that the decision is correct. A further advantage of using the 3D model is in the situation where no cameras have a view of the ball striking the players arm and/or hand. This may occur where the cameras' view is blocked by other players or the point of contact on the hand and/or arm is on the other side of the player's body. In this case, the tracking system will provide an accurate location for the player's hand and/or arm and the ball and this can be shown in a 3D model view. This enables the officials to make a decision regarding the handball. In this case, the natural silhouette player pose 515 will be modelled as a 3D image and overlaid on the model. In other words, the pose of the player and the predetermined pose are 3D models. Again, in the event that the hand or arm of the player is outside of the natural silhouette player pose 515 when the ball strikes the hand or arm, a handball will be awarded. This will allow a more accurate representation of a natural silhouette.

The natural silhouette player pose 515 may be generated based upon normal movement of a player during a soccer match. For example, the player may have their arms in an unusual position when performing a slide tackle,, or will hold their arms in an "L" shape when running. This may change the shape of the natural silhouette player pose 515 depending upon the action of the player. In other words, in embodiment, the method comprises selecting the predetermined pose based upon the action performed by the player when the ball contacts the arm or hand of the player. Accordingly, a plurality of natural silhouette player poses may be generated and will be overlaid on the pose of the player when checking whether a handball has occurred or not. This will provide a more accurate natural silhouette for the player.

The various different natural poses of a player may be amalgamated into a single natural silhouette player pose that may be applied to the pose of the player irrespective of the action of the player when checking whether a handball has occurred or not.

The natural silhouette player pose 515 may be generated by machine learning. Specifically, the natural silhouette player pose 515 may be derived from reviewing many different poses performed by a soccer player during previous instances when a handball decision was given. In other words, there is provided a step of generating the predetermined pose using the hand or arm position of a player during previous incidents of a handball. This allows consistency of the decision using VAR with previous decisions without VAR.

The velocity of the ball when the ball strikes the arm or hand of the player may be determined using known techniques. This may be displayed to the operator and/or referee. The velocity may include both the speed and direction of the ball. Either the speed or the direction of the ball is displayed. The purpose of providing the additional information is to provide context to the incident to allow the operator and/or referee to determine whether a handball has taken place. Other factors such as whether a deflection of the ball took place prior to ball striking the player's arm may be displayed. Moreover, the distance between the deflection and the arm or hand may be also shown. This additional information will provide further contextual information to the operator and/or referee and may help determine whether a handball took place.

This additional information may be compared with similar previous incidents logged in a database. The outcome of the previous incidents may also be displayed to the operator and/or referee to assist the operator and/or referee determine whether a handball has taken place.

This additional information may be used to automatically detect a handball. In this case, the additional information may be compared with similar previous incidents and the outcome selected by the apparatus will be the same as the previous incident having the most similar characteristics. In this case, no displaying of the additional information is necessary.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

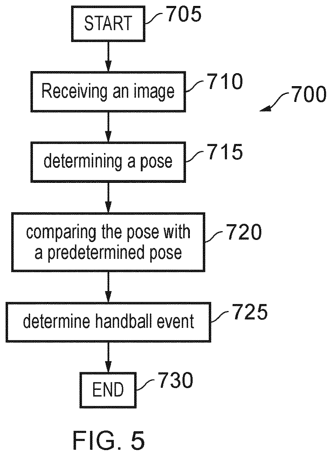

Referring to Figure 5 a process carried out by the processing circuitry 405 is shown. The process 700 starts at step 705. The process moves to step 710 where an image is received from a camera, the image including an arm or hand of the player and a ball. The process then moves to step 715 where a pose of the player when the ball contacts the arm or hand of the player is determined. The process moves to step 720 where the pose of the player is compared against a predetermined pose. The process then moves to step 725 where a handball event is determined to have occurred on the basis of the comparison. The process then ends at step 730.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

## Claims

1. A method of determining a handball performed by a player from an image; comprising:
receiving an image from a camera, the image including an arm or hand of the player in contact with a ball;
determining a pose of the player when the ball contacts the arm or hand of the player;
comparing the pose of the player against a predetermined pose; and
on the basis of the comparison, determining that a handball event has occurred; wherein
the comparison comprises determining a boundary defining a natural silhouette pose of the player in the predetermined pose and determining whether the pose of the player is outside the boundary by overlaying the natural silhouette pose onto the image of the player at the moment that the ball hits the player's arm or hand;
if the pose of the player is outside the boundary, it is determined that a handball event has occurred; and
if the pose of the player is not outside the boundary, it is determined that a handball event has not occurred.

2. A method according to claim 1, wherein determining whether the pose of the player is outside the boundary comprises determining if the player's arm or hand that is contacted by the ball is outside the natural silhouette pose.

3. A method according to claim 1, wherein the pose of the player and the predetermined pose are 3D models.

4. A method according to claim 1, comprising:
selecting the predetermined pose based upon the action performed by the player when the ball contacts the arm or hand of the player; and/or
generating the predetermined pose using the hand or arm position of a player during previous incidents of a handball.

5. A method according to claim 1, comprising determining when the ball contacts the arm or hand of the player using player tracking and ball tracking.

6. A method according to claim 1, comprising determining the velocity of the ball at the moment the ball contacts the arm or hand of the player; and determining that a handball event has occurred on the basis of the velocity of the ball and previous handball decisions.

7. A computer program product comprising computer readable instructions which, when loaded onto a computer, configures the computer to perform a method according to claim 1.

8. A device for determining a handball performed by a player from an image; comprising:
communication circuitry configured to receive an image from a camera, the image including an arm or hand of the player in contact with a ball; and processing circuitry configured to:
determine a pose of the player when the ball contacts the arm or hand of the player;
compare the pose of the player against a predetermined pose; and
on the basis of the comparison, determine that a handball event has occurred; wherein
the comparison comprises determining a boundary defining a natural silhouette pose of the player in the predetermined pose and determining whether the pose of the player is outside the boundary by overlaying the natural silhouette pose onto the image of the player at the moment that the ball hits the player's arm or hand;
if the pose of the player is outside the boundary, it is determined that a handball event has occurred; and
if the pose of the player is not outside the boundary, it is determined that a handball event has not occurred.

9. A device according to claim 8, wherein determining whether the pose of the player is outside the boundary comprises determining if the player's arm or hand that is contacted by the ball is outside the natural silhouette pose.

10. A device according to claim 8, wherein the pose of the player and the predetermined pose are 3D models.

11. A device according to claim 8, wherein the processing circuitry is configured to:
select the predetermined pose based upon the action performed by the player when the ball contacts the arm or hand of the player; and/or
generate the predetermined pose using the hand or arm position of a player during previous incidents of a handball.

12. A device according to claim 8, wherein the processing circuitry is configured to: determine when the ball contacts the arm or hand of the player using player tracking and ball tracking.

13. A device according to claim 8, wherein the processing circuitry is configured to: determine the velocity of the ball at the moment the ball contacts the arm or hand of the player; and determine that a handball event has occurred on the basis of the velocity of the ball and previous handball decisions.

## Patentansprüche

1. Verfahren zum Bestimmen eines Handspiels, das durch einen Spieler durchgeführt wird, aus einem Bild; umfassend:
Empfangen eines Bilds von einer Kamera, wobei das Bild einen Arm oder eine Hand des Spielers in Berührung mit einem Ball einschließt;
Bestimmen einer Pose des Spielers, wenn der Ball den Arm oder die Hand des Spielers berührt;
Vergleichen der Pose des Spielers mit einer zuvor bestimmten Pose; und
auf der Basis des Vergleichs, Bestimmen, dass ein Handspielereignis aufgetreten ist; wobei
der Vergleich das Bestimmen einer Grenze, die eine Pose einer natürlichen Silhouette des Spielers in der zuvor bestimmten Pose definiert, und das Bestimmen umfasst, ob sich die Pose des Spielers außerhalb der Grenze befindet, durch Überlagern der Pose der natürlichen Silhouette auf das Bild des Spielers zu dem Zeitpunkt, in dem der Ball den Arm oder die Hand des Spielers trifft;
falls sich die Pose des Spielers außerhalb der Grenze befindet, bestimmt wird, dass ein Handspielereignis aufgetreten ist; und
falls die Pose des Spielers nicht außerhalb der Grenze liegt, bestimmt wird, dass ein Handspielereignis nicht aufgetreten ist.

2. Verfahren nach Anspruch 1, wobei das Bestimmen, ob die Pose des Spielers außerhalb der Grenze liegt, das Bestimmen umfasst, ob der Arm oder die Hand des Spielers, die durch den Ball berührt wird, außerhalb der Pose der natürlichen Silhouette liegt.

3. Verfahren nach Anspruch 1, wobei die Pose des Spielers und die zuvor bestimmte Pose 3D-Modelle sind.

4. Verfahren nach Anspruch 1, umfassend:
Auswählen der zuvor bestimmten Pose basierend auf der Aktion, die durch den Spieler durchgeführt wird, wenn der Ball den Arm oder die Hand des Spielers berührt; und/oder
Erzeugen der zuvor bestimmten Pose unter Verwendung der Hand- oder Armposition eines Spielers während früherer Vorfälle eines Handspiels.

5. Verfahren nach Anspruch 1, umfassend das Bestimmen, wann der Ball den Arm oder die Hand des Spielers berührt unter Verwendung von Spielerverfolgung und Ballverfolgung.

6. Verfahren nach Anspruch 1, umfassend das Bestimmen der Geschwindigkeit des Balls zu dem Zeitpunkt, in dem der Ball den Arm oder die Hand des Spielers berührt; und Bestimmen, dass ein Handspielereignis auf der Basis der Geschwindigkeit des Balls und vorheriger Handspielentscheidungen aufgetreten ist.

7. Computerprogrammprodukt, umfassend computerlesbare Anweisungen, die, wenn sie auf einen Computer geladen werden, den Computer konfiguriert, um ein Verfahren nach Anspruch 1 durchzuführen.

8. Vorrichtung zum Bestimmen eines Handspiels, die durch einen Spieler aus einem Bild durchgeführt wird; umfassend:
Kommunikationsschaltung, die konfiguriert ist, um ein Bild von einer Kamera zu empfangen, wobei das Bild einen Arm oder eine Hand des Spielers in Berührung mit einem Ball einschließt; und eine Verarbeitungsschaltung, die konfiguriert ist zum:
Bestimmen einer Pose des Spielers, wenn der Ball den Arm oder die Hand des Spielers berührt;
Vergleichen der Pose des Spielers mit einer zuvor bestimmten Pose; und
auf der Basis des Vergleichs, Bestimmen, dass ein Handspielereignis aufgetreten ist; wobei
der Vergleich das Bestimmen einer Grenze, die eine Pose der natürlichen Silhouette des Spielers in der zuvor bestimmten Pose definiert und das Bestimmen umfasst, ob sich die Pose des Spielers außerhalb der Grenze befindet, durch Überlagern der Pose der natürlichen Silhouette auf das Bild des Spielers zu dem Zeitpunkt, in dem der Ball den Arm oder die Hand des Spielers trifft;
falls sich die Pose des Spielers außerhalb der Grenze befindet, bestimmt wird, dass ein Handspielereignis aufgetreten ist; und
falls die Pose des Spielers nicht außerhalb der Grenze liegt, bestimmt wird, dass ein Handspielereignis nicht aufgetreten ist.

9. Vorrichtung nach Anspruch 8, wobei das Bestimmen, ob die Pose des Spielers außerhalb der Grenze liegt, das Bestimmen umfasst, ob der Arm oder die Hand des Spielers, die durch den Ball berührt wird, außerhalb der Pose der natürlichen Silhouetten liegt.

10. Vorrichtung nach Anspruch 8, wobei die Pose des Spielers und die zuvor bestimmte Pose 3D-Modelle sind.

11. Vorrichtung nach Anspruch 8, wobei die Verarbeitungsschaltung konfiguriert ist zum:
Auswählen der zuvor bestimmten Pose basierend auf der Aktion, die durch den Spieler durchgeführt wird, wenn der Ball den Arm oder die Hand des Spielers berührt; und/oder
Erzeugen der zuvor bestimmten Pose unter Verwendung der Hand- oder Armposition eines Spielers während früherer Vorfälle eines Handspiels.

12. Vorrichtung nach Anspruch 8, wobei die Verarbeitungsschaltung konfiguriert ist zum: Bestimmen, wann der Ball den Arm oder die Hand des Spielers berührt, unter Verwendung von Spielerverfolgung und Ballverfolgung.

13. Vorrichtung nach Anspruch 8, wobei die Verarbeitungsschaltung konfiguriert ist zum: Bestimmen der Geschwindigkeit des Balls zu dem Zeitpunkt, in dem der Ball den Arm oder die Hand des Spielers berührt; und Bestimmen, dass ein Handspielereignis auf der Basis der Geschwindigkeit des Balls und der vorherigen Handspielentscheidungen aufgetreten ist.

## Revendications

1. Procédé de détermination d'une main réalisée par un joueur à partir d'une image ; comprenant :
la réception d'une image en provenance d'une caméra, l'image comportant un bras ou une main du joueur en contact avec un ballon ;
la détermination d'une position du joueur lorsque le ballon entre en contact avec le bras ou la main du joueur ;
la comparaison de la position du joueur à une position prédéterminée ; et
sur la base de la comparaison, la détermination du fait qu'un événement de main s'est produit ; dans lequel
la comparaison comprend la détermination d'une limite définissant une position de silhouette naturelle du joueur dans la position prédéterminée et la détermination du fait de savoir si la position du joueur est en dehors de la limite en superposant la position de silhouette naturelle sur l'image du joueur au moment où le ballon touche le bras ou la main du joueur ;
si la position du joueur est en dehors de la limite, il est déterminé qu'un événement de main s'est produit ; et
si la position du joueur n'est pas en dehors de la limite, il est déterminé qu'un événement de main ne s'est pas produit.

2. Procédé selon la revendication 1, dans lequel la détermination du fait de savoir si la position du joueur est en dehors de la limite comprend la détermination du fait de savoir si le bras ou la main du joueur qui est en contact avec le ballon est en dehors de la position de silhouette naturelle.

3. Procédé selon la revendication 1, dans lequel la position du joueur et la position prédéterminée sont des modèles 3D.

4. Procédé selon la revendication 1, comprenant :
la sélection de la position prédéterminée sur la base de l'action réalisée par le joueur lorsque le ballon entre en contact avec le bras ou la main du joueur ; et/ou
la génération de la position prédéterminée à l'aide de la position de la main ou du bras d'un joueur pendant les incidents précédents d'une main.

5. Procédé selon la revendication 1, comprenant la détermination du moment où le ballon entre en contact avec le bras ou la main du joueur à l'aide d'un suivi de joueur et un suivi de ballon.

6. Procédé selon la revendication 1, comprenant la détermination de la vitesse du ballon au moment où le ballon entre en contact avec le bras ou la main du joueur ; et la détermination du fait qu'un événement de main s'est produit sur la base de la vitesse du ballon et des décisions de main précédentes.

7. Produit-programme informatique comprenant des instructions lisibles par ordinateur qui, lorsqu'elles sont chargées sur un ordinateur, configurent l'ordinateur pour réaliser un procédé selon la revendication 1.

8. Dispositif pour déterminer une main réalisée par un joueur à partir d'une image ; comprenant :
une circuiterie de communication configurée pour recevoir une image en provenance d'une caméra, l'image comportant un bras ou une main du joueur en contact avec un ballon ; et une circuiterie de traitement configurée pour :
déterminer une position du joueur lorsque le ballon entre en contact avec le bras ou la main du joueur ;
comparer la position du joueur à une position prédéterminée ; et
sur la base de la comparaison, déterminer qu'un événement de main s'est produit ; dans lequel
la comparaison comprend la détermination d'une limite définissant une position de silhouette naturelle du joueur dans la position prédéterminée et la détermination du fait de savoir si la position du joueur est en dehors de la limite en superposant la position de silhouette naturelle sur l'image du joueur au moment où le ballon touche le bras ou la main du joueur ;
si la position du joueur est en dehors de la limite, il est déterminé qu'un événement de main s'est produit ; et
si la position du joueur n'est pas en dehors de la limite, il est déterminé qu'un événement de main ne s'est pas produit.

9. Dispositif selon la revendication 8, dans lequel la détermination du fait de savoir si la position du joueur est en dehors de la limite comprend la détermination du fait de savoir si le bras ou la main du joueur qui est en contact avec le ballon est en dehors de la position de silhouette naturelle.

10. Dispositif selon la revendication 8, dans lequel la position du joueur et la position prédéterminée sont des modèles 3D.

11. Dispositif selon la revendication 8, dans lequel la circuiterie de traitement est configurée pour :
sélectionner la position prédéterminée sur la base de l'action réalisée par le joueur lorsque le ballon entre en contact avec le bras ou la main du joueur ; et/ou
générer la position prédéterminée à l'aide de la position de la main ou du bras d'un joueur pendant les incidents précédents d'une main.

12. Dispositif selon la revendication 8, dans lequel la circuiterie de traitement est configurée pour : déterminer le moment où le ballon entre en contact avec le bras ou la main du joueur à l'aide d'un suivi de joueur et un suivi de ballon.

13. Dispositif selon la revendication 8, dans lequel la circuiterie de traitement est configurée pour : déterminer la vitesse du ballon au moment où le ballon entre en contact avec le bras ou la main du joueur ; et déterminer qu'un événement de main s'est produit sur la base de la vitesse du ballon et des décisions de main précédentes.
